# EUROPEAN PATENT APPLICATION

(11) **EP 4 848 819 A1**
(43) Date of publication of application: **02.12.2026**
(21) Application number: 24919343.4
(22) Date of filing: 25.01.2024
(51) Int. Cl.: H04W 36/14

(54) **COMMUNICATION METHOD, NETWORK ELEMENT, DEVICE, TERMINAL, APPARATUS, AND STORAGE MEDIUM**

(71) Applicant: Beijing Xiaomi Mobile Software Co., Ltd., Beijing 100085 (CN)
(72) Inventor: SHANG, Zhengyi, Beijing 100085 (CN); LU, Wei, Beijing 100085 (CN)
(74) Representative: Dehns Germany Partnerschaft mbB
(86) International application number: PCT/CN2024/074130
(87) International publication number: WO 2025/156234

(57) **Abstract**

The present disclosure relates to a communication method, a network element, a device, a terminal, an apparatus, and a storage medium. The method comprises: receiving a first request sent by a first device, wherein the first request is sent to the first device when a terminal is disconnected from a second device, and then determines to establish a communication connection with a first network element by means of the first device; and sending a first response to the first device on the basis of the received first request, wherein the first device is a terrestrial network device, the second device is a non-terrestrial network device, and the first response is used for indicating that the terminal is allowed to establish a communication connection with the first network element by means of the first device. The present disclosure solves the problem in the prior art that a terminal is not supported to switch from a non-terrestrial network device to a terrestrial network device to access a core network.

## Description

### TECHNICAL FIELD

The present disclosure relates to the field of communication technology, and in particular to a communication method, a network element, a device, a terminal, an apparatus and a storage medium.

### BACKGROUND

Currently, a terminal can access a core network via a non-terrestrial network (NTN) path or a terrestrial network (TN) path. How the terminal switches from a non-terrestrial network path to a terrestrial network path to access the core network requires further study.

### SUMMARY

Embodiments of the present disclosure propose a communication method, a network element, a device, a terminal, an apparatus and a storage medium.

In a first aspect, some embodiments of the present disclosure propose a communication method, which is performed by a first network element and includes:
receiving a first request sent by a first device, where the first request is sent to the first device when a terminal, after releasing a connection with a second device, determines to establish a communication connection with the first network element through the first device; and
sending a first response to the first device according to the received first request;
where the first device is a device of a terrestrial network; the second device is a device of a non-terrestrial network;
the first response indicates acceptance of establishing the communication connection between the terminal and the first network element through the first device.

In a second aspect, some embodiments of the present disclosure propose a communication method, which is performed by a first device and includes:
receiving a first request sent by a terminal, where the first request is sent to the first device when the terminal, after releasing a connection with a second device, determines to establish a communication connection with a first network element through the first device;
sending the first request to the first network element;
where the first device is a device of a terrestrial network; the second device is a device of a non-terrestrial network.

In a third aspect, some embodiments of the present disclosure propose a communication method, which is performed by a terminal and includes:
sending a first request to a first device, where the first request is sent to the first device when the terminal, after releasing a connection with a second device, determines to establish a communication connection with a first network element through the first device;
where the first device is a device of a terrestrial network; the second device is a device of a non-terrestrial network.

In a fourth aspect, some embodiments of the present disclosure propose a first network element, including:
a receiving module, configured to receive a first request sent by a first device, where the first request is sent to the first device when a terminal, after releasing a connection with a second device, determines to establish a communication connection with the first network element through the first device; and
a sending module, configured to send a first response to the first device according to the received first request;
where the first device is a device of a terrestrial network; the second device is a device of a non-terrestrial network;
the first response indicates acceptance of establishing the communication connection between the terminal and the first network element through the first device.

In a fifth aspect, some embodiments of the present disclosure propose a first device, including:
a receiving module, configured to receive a first request sent by a terminal, where the first request is sent to the first device when the terminal, after releasing a connection with a second device, determines to establish a communication connection with a first network element through the first device; and
a sending module, configured to send the first request to the first network element;
where the first device is a device of a terrestrial network; the second device is a device of a non-terrestrial network.

In a sixth aspect, some embodiments of the present disclosure propose a terminal, including:
a sending module, configured to send a first request to a first device, where the first request is sent to the first device when the terminal, after releasing a connection with a second device, determines to establish a communication connection with a first network element through the first device;
where the first device is a device of a terrestrial network; the second device is a device of a non-terrestrial network.

In a seventh aspect, some embodiments of the present disclosure propose a first network element, including:
one or more processors;
where the first network element is configured to perform the communication method described in any example of the first aspect according to some embodiments of the present disclosure.

In an eighth aspect, some embodiments of the present disclosure propose a first device, including:
one or more processors;
where the first device is configured to perform the communication method described in any example of the second aspect according to some embodiments of the present disclosure.

In a ninth aspect, some embodiments of the present disclosure propose a terminal, including:
one or more processors;
where the terminal is configured to perform the communication method described in any example of the third aspect according to some embodiments of the present disclosure.

In a tenth aspect, some embodiments of the present disclosure propose a communication system, including a first network element, a first device, and a terminal; where the first network element is configured to implement the communication method described in any example of the first aspect according to some embodiments of the present disclosure; the first device is configured to implement the communication method described in any example of the second aspect according to some embodiments of the present disclosure; the terminal is configured to implement the communication method described in any example of the third aspect according to some embodiments of the present disclosure.

In an eleventh aspect, some embodiments of the present disclosure propose a storage medium, where when instructions are executed on a communication device, the communication device is caused to perform the communication method described in any example of the first aspect according to some embodiments of the present disclosure.

### BRIEF DESCRIPTION OF THE DRAWINGS

In order to more clearly illustrate the technical solutions in some embodiments of the present disclosure, the following briefly introduces the drawings required for describing some embodiments. The following drawings are merely some embodiments of the present disclosure and do not impose specific limitations on the scope of protection of the present disclosure.
FIG. 1A is an exemplary schematic diagram of an architecture of a communication system according to some embodiments of the present disclosure.
FIG. 1B is an exemplary schematic diagram showing a terminal switching from a device of a non-terrestrial network to a device of a terrestrial network to access a core network according to some embodiments of the present disclosure.
FIG. 2 is an interaction schematic diagram of a communication method according to some embodiments of the present disclosure.
FIG. 3 is a schematic flowchart of a communication method according to some embodiments of the present disclosure.
FIG. 4 is a schematic flowchart of a communication method according to some embodiments of the present disclosure.
FIG. 5 is a schematic flowchart of a communication method according to some embodiments of the present disclosure.
FIG. 6 is an interaction schematic diagram of a communication method according to some embodiments of the present disclosure.
FIG. 7A is a schematic structural diagram of a first network element according to some embodiments of the present disclosure.
FIG. 7B is a schematic structural diagram of a first device according to some embodiments of the present disclosure.
FIG. 7C is a schematic structural diagram of a terminal according to some embodiments of the present disclosure.
FIG. 8A is a schematic structural diagram of a communication device according to some embodiments of the present disclosure.
FIG. 8B is a schematic structural diagram of a chip according to some embodiments of the present disclosure.

### DETAILED DESCRIPTION

Embodiments of the present disclosure propose a communication method, a network element, a device, a terminal, an apparatus and a storage medium.

In a first aspect, some embodiments of the present disclosure propose a communication method, which is performed by a first network element and includes:
receiving a first request sent by a first device, where the first request is sent to the first device when a terminal, after releasing a connection with a second device, determines to establish a communication connection with the first network element through the first device;
sending a first response to the first device according to the received first request;
where the first device is a device of a terrestrial network; the second device is a device of a non-terrestrial network;
the first response indicates acceptance of establishing the communication connection between the terminal and the first network element through the first device.

In the above embodiments, the first network element sends a first response to the first device according to the received first request; thus, the terminal can switch from accessing the first network element via the second device of the non-terrestrial network to accessing the first network element via the first device of the terrestrial network.

Based on some embodiments of the first aspect, in some further embodiments, after receiving the first request sent by the first device, the method further includes:
when the terminal satisfies a first condition, using a first non-access stratum (NAS) count pre-stored in context information of the terminal as a second NAS count, and additionally storing at least one of the second NAS count and a first cell identifier in the context information of the terminal;
where the first condition includes that the terminal is allowed to perform a store-and-forward operation, or the terminal is allowed to be in a store-and-forward operation;
the first cell identifier is a cell identifier pre-stored in the context information of the terminal and having a mapping relationship with the second device.

In the above embodiments, when the terminal satisfies the first condition, at least one of the second NAS count and the first cell identifier is additionally stored in the context information of the terminal; thus, after a feeder link of the second device becomes available, when the first network element receives data temporarily stored by the second device, it can use at least one of the second NAS count and the first cell identifier to determine whether the device sending the first message is the second device or to verify the integrity of the first message.

Based on some embodiments of the first aspect, in some further embodiments, the terminal satisfying the first condition is determined through a following manner:
the context information of the terminal includes a first indication;
where the first indication indicates that the terminal is allowed to perform the store-and-forward operation, or that the terminal is allowed to be in the store-and-forward operation.

In the above embodiments, the first network element indication is used for determining that the terminal is allowed to perform the store-and-forward operation, or that the terminal is allowed to be in the store-and-forward operation; thus, when the first indication is stored in the context information of the terminal, it can be determined that the terminal satisfies the first condition.

Based on some embodiments of the first aspect, in some further embodiments, the context information of the terminal includes cell information, and the cell information indicates an area covered by a last device having a connection relationship with the terminal;
the terminal satisfying the first condition is also determined through a following manner:
determining, according to the cell information, the last device having the connection relationship with the terminal;
the device is a non-terrestrial device, determining that the terminal satisfies the first condition.

In the above embodiments, the context information of the terminal includes cell information, and it is determined according to the cell information that the last device having the connection relationship with the terminal is a non-terrestrial device; thus, the first network element can determine, according to the cell information, that the terminal satisfies the first condition.

Based on some embodiments of the first aspect, in some further embodiments, the first request includes a first NAS sequence number;
the first condition is further determined by at least one of following:
a first difference is greater than a preset threshold;
a feeder link corresponding to the second device is unavailable;
where the first difference is a difference between the first NAS sequence number and a second NAS sequence number;
the second NAS sequence number is determined based on the first NAS count.

In the above embodiments, the first condition is further determined by at least one of the first difference being greater than the preset threshold and the feeder link corresponding to the second device being unavailable; thus, the first network element can determine the first condition more comprehensively.

Based on some embodiments of the first aspect, in some further embodiments, after sending the first response to the first device, the method further includes:
receiving a first message sent by the second device after a feeder link is available, where the first message includes a second cell identifier and a third NAS sequence number, and the second cell identifier has a mapping relationship with the second device;
verifying integrity of the first message using an integrity verification algorithm.

In the above embodiments, the first network element receives the first message sent by the second device, and verifies the integrity of the first message using the integrity verification algorithm; thus, the first network element can determine whether to accept the first message.

Based on some embodiments of the first aspect, in some further embodiments, verifying the integrity of the first message using the integrity verification algorithm includes:
the first cell identifier and the second cell identifier are the same, and verifying the integrity of the first message using the integrity verification algorithm;
where input of the integrity verification algorithm is determined based on the third NAS sequence number and the second NAS count.

In the above embodiments, if the first cell identifier is stored in the context information of the terminal, it can be determined whether the device sending the first message is the second device by checking whether the first cell identifier and the second cell identifier are the same; if yes, the integrity of the first message is verified using the integrity verification algorithm.

Based on some embodiments of the first aspect, in some further embodiments, verifying the integrity of the first message using the integrity verification algorithm includes:
verifying the integrity of the first message using the integrity verification algorithm;
where input of the integrity verification algorithm is determined based on the third NAS sequence number and the second NAS count.

In the above embodiments, if the first cell identifier is not stored in the context information of the terminal, the integrity of the first message is directly verified using the integrity verification algorithm.

Based on some embodiments of the first aspect, in some further embodiments, the first message further includes first data, and the first data is uplink data sent by the terminal to the second device;
after verifying the integrity of the first message using the integrity verification algorithm, the method further includes:
an integrity verification result of the first message indicates pass, accepting the first data;
the integrity verification result of the first message indicates fail, rejecting the first data.

In the above embodiments, if the integrity verification result of the first message indicates pass, the first data is accepted; if the integrity verification result of the first message indicates fail, the first data is rejected; thus, whether to accept the first message is determined according to the integrity verification result and/or according to the verification result of the second device.

Based on some embodiments of the first aspect, in some further embodiments, after accepting the first data, the method further includes:
deleting the second NAS count and/or the first cell identifier stored in the context information of the terminal.

In the above embodiments, after accepting the first data, the second NAS count and/or the first cell identifier stored in the context information of the terminal are deleted; thus, the content stored in the context information of the terminal can be reduced, releasing more storage space.

In a second aspect, some embodiments of the present disclosure propose a communication method, which is performed by a first device and includes:
receiving a first request sent by a terminal, where the first request is sent to the first device when the terminal, after releasing a connection with a second device, determines to establish a communication connection with a first network element through the first device;
sending the first request to the first network element;
where the first device is a device of a terrestrial network; the second device is a device of a non-terrestrial network.

In the above embodiments, the first device receives the first request sent by the terminal, and sends the first request to the first network element, where the first request is sent to the first device when the terminal, after releasing the connection with the second device, determines to establish the communication connection with the first network element through the first device; thus, the terminal can request to switch from accessing the first network element via the second device of the non-terrestrial network to accessing the first network element via the first device of the terrestrial network.

Based on some embodiments of the second aspect, in some further embodiments, after receiving the first request sent by the terminal, the method further includes:
receiving a first response sent by the first network element, where the first response indicates that the first network element accepts establishing the communication connection between the terminal and the first network element through the first device; and
sending the first response to the terminal.

In the above embodiments, the first device receives the first response sent by the first network element, and sends the first response to the terminal; thus, the terminal can switch from accessing the first network element via the second device of the non-terrestrial network to accessing the first network element via the first device of the terrestrial network.

In a third aspect, some embodiments of the present disclosure propose a communication method, which is performed by a terminal and includes:
sending a first request to a first device, where the first request is sent to the first device when the terminal, after releasing a connection with a second device, determines to establish a communication connection with a first network element through the first device;
where the first device is a device of a terrestrial network; the second device is a device of a non-terrestrial network.

In the above embodiments, the terminal sends the first request to the first device; thus, the terminal can request to switch from accessing the first network element via the second device of the non-terrestrial network to accessing the first network element via the first device of the terrestrial network.

Based on some embodiments of the third aspect, in some further embodiments, sending the first request to the first device includes:
determining that a second condition is satisfied, and sending the first request to the first device;
the second condition is at least one of following:
   a signal strength of the first device is greater than a signal strength of the second device;
   a feeder link of the second device is unavailable.

In the above embodiments, when the terminal satisfies the second condition, it determines to send the first request to the first device; thus, the terminal can send the first request to the first device when the signal strength of the first device is stronger and/or the feeder link of the second device is unavailable.

Based on some embodiments of the third aspect, in some further embodiments, after sending the first request to the first device, the method further includes:
receiving a first response, where the first response indicates acceptance of establishing the communication connection between the terminal and the first network element through the first device.

In the above embodiments, the terminal receives the first response; thus, the terminal can switch from accessing the first network element via the second device of the non-terrestrial network to accessing the first network element via the first device of the terrestrial network.

In a fourth aspect, some embodiments of the present disclosure propose a first network element, including:
a receiving module, configured to receive a first request sent by a first device, where the first request is sent to the first device when a terminal, after releasing a connection with a second device, determines to establish a communication connection with the first network element through the first device; and
a sending module, configured to send a first response to the first device according to the received first request;
where the first device is a device of a terrestrial network; the second device is a device of a non-terrestrial network;
the first response indicates acceptance of establishing the communication connection between the terminal and the first network element through the first device.

In a fifth aspect, some embodiments of the present disclosure propose a first device, including:
a receiving module, configured to receive a first request sent by a terminal, where the first request is sent to the first device when the terminal, after releasing a connection with a second device, determines to establish a communication connection with a first network element through the first device; and
a sending module, configured to send the first request to the first network element;
where the first device is a device of a terrestrial network; the second device is a device of a non-terrestrial network.

In a sixth aspect, some embodiments of the present disclosure propose a terminal, including:
a sending module, configured to send a first request to a first device, where the first request is sent to the first device when the terminal, after releasing a connection with a second device, determines to establish a communication connection with a first network element through the first device;
where the first device is a device of a terrestrial network; the second device is a device of a non-terrestrial network.

In a seventh aspect, some embodiments of the present disclosure propose a first network element, including:
one or more processors;
where the first network element is configured to perform the communication method described in any example of the first aspect according to some embodiments of the present disclosure.

In an eighth aspect, some embodiments of the present disclosure propose a first device, including:
one or more processors;
where the first device is configured to perform the communication method described in any example of the second aspect according to some embodiments of the present disclosure.

In a ninth aspect, some embodiments of the present disclosure propose a terminal, including:
one or more processors;
where the terminal is configured to perform the communication method described in any example of the third aspect according to some embodiments of the present disclosure.

In a tenth aspect, some embodiments of the present disclosure propose a communication system, including a first network element, a first device, and a terminal; where the first network element is configured to implement the communication method described in any example of the first aspect according to some embodiments of the present disclosure; the first device is configured to implement the communication method described in any example of the second aspect according to some embodiments of the present disclosure; the terminal is configured to implement the communication method described in any example of the third aspect according to some embodiments of the present disclosure.

In an eleventh aspect, some embodiments of the present disclosure propose a storage medium, where when instructions are executed on a communication device, the communication device is caused to perform the communication method according to any example of the embodiments of the present disclosure.

In a twelfth aspect, some embodiments of the present disclosure propose a program product, where when the program product is executed by a communication device, the communication device is caused to perform the method according to some embodiments of the first aspect, the second aspect, and the third aspect.

In a thirteenth aspect, some embodiments of the present disclosure propose a computer program, where when the computer program is run on a computer, the computer is caused to perform the method according to some embodiments of the first aspect, the second aspect, and the third aspect.

In a fourteenth aspect, some embodiments of the present disclosure propose a chip or a chip system. The chip or chip system includes a processing circuit configured to perform the method according to some embodiments of the first aspect, the second aspect, and the third aspect.

It can be understood that the above network element, device, terminal, communication system, storage medium, program product, computer program, chip or chip system are all configured to perform the methods according to some embodiments of the present disclosure. Therefore, the beneficial effects that can be achieved can be referred to the beneficial effects in the corresponding methods, and will not be repeated here.

Embodiments of the present disclosure propose a communication method, a network element, a device, a terminal, an apparatus and a storage medium. In some embodiments, terms such as communication method, signal sending method, frame sending method, etc. can be interchanged, and terms such as information processing system, communication system, etc. can be interchanged.

Embodiments of the present disclosure are not exhaustive, but are merely illustrations of some embodiments, and are not intended to specifically limit the protection scope of the present disclosure. Where there is no contradiction, each step in a certain embodiment can be implemented as an independent embodiment, and the steps can be arbitrarily combined. For example, a solution obtained by removing some steps in a certain embodiment can also be implemented as an independent embodiment, and the order of steps in a certain embodiment can be arbitrarily exchanged. In addition, optional implementations in a certain embodiment can be arbitrarily combined. Furthermore, different embodiments can be arbitrarily combined, for example, some or all steps of different embodiments can be arbitrarily combined, and a certain embodiment can be arbitrarily combined with example of other embodiments.

In various embodiments of the present disclosure, unless otherwise specified or logically conflicted, terms and/or descriptions between some embodiments are consistent and can be cross-referenced, and technical features in different embodiments can be combined to form new embodiments according to their inherent logical relationships.

The terms used in some embodiments of the present disclosure are for the purpose of describing particular embodiments only and are not intended to be limiting of the present disclosure.

In some embodiments of the present disclosure, "a plurality of (multiple)" means two or more.

In some embodiments, terms such as "at least one of (at least one item, on or more items)", "one or more", "a plurality of", "multiple" can be interchanged.

In some embodiments, expressions such as "at least one of A and B", "A and/or B", "in one case A, in another case B", "in response to one case A, in response to another case B" may include the following technical solutions depending on the situation. In some embodiments A (A is performed independently of B); in some embodiments B (B is performed independently of A). In some embodiments, selectively execution is performed on A or B (A and B are selectively performed). In some embodiments A and B (both A and B are performed). The same applies when there are more branches such as A, B, C, etc.

In some embodiments, expressions such as "A or B" may include the following technical solutions depending on the situation. In some embodiments A (A is performed independently of B); in some embodiments B (B is performed independently of A). In some embodiments, selectively execution is performed on A or B (A and B are selectively performed). The same applies when there are more branches such as A, B, C, etc.

Prefix words such as "first" and "second" in some embodiments of the present disclosure are only used to distinguish different described objects and do not impose limitations on the position, order, priority, quantity or content of the described objects. The description of the described objects is subject to the context in the claims or embodiments, and should not be construed as additional limitations due to the use of prefix words. For example, if the described object is a "field", then the ordinal numbers before "field" in "first field" and "second field" do not limit the position or order between the "fields". "First" and "second" do not limit whether the "fields" they modify are in the same message, nor do they limit the order of the "first field" and the "second field". For another example, if the described object is a "level", then the ordinal numbers before "level" in "first level" and "second level" do not limit the priority between the "levels". For another example, the number of described objects is not limited by the ordinal numbers, and may be one or more. Taking "first apparatus" as an example, the number of "apparatus" may be one or more. In addition, objects modified by different prefix words may be the same or different. For example, if the described object is "apparatus", then "first apparatus" and "second apparatus" may be the same apparatus or different apparatuses, and their types may be the same or different. For another example, if the described object is "information", then "first information" and "second information" may be the same information or different information, and their content may be the same or different.

In some embodiments, "comprising A", "including A", "indicating A", "carrying A" can be interpreted as directly carrying A, or can be interpreted as indirectly indicating A.

In some embodiments, terms such as "in response to", "in response to determining", "in the case of", "when", "upon", "if", "in case" can be interchanged.

In some embodiments, terms such as "greater than", " greater than or equal to", "not less than", "more than", "more than or equal to", "not fewer than", "higher than", "higher than or equal to", "not lower than", "above" can be interchanged; terms such as "less than", "less than or equal to", "not greater than", "fewer than", "fewer than or equal to", "not more than", "lower than", "lower than or equal to", "not higher than", "below" can be interchanged.

In some embodiments, apparatus and device can be interpreted as physical or virtual, and their names are not limited to those recorded in the embodiments. In some cases, they can also be understood as "equipment", "device", "circuit", "apparatus", "node", "function", "unit", "section", "system", "network", "chip", "chip system", "entity", "subject", etc.

In some embodiments, terms such as "access network device (AN device)", "radio access network device (RAN device)", "base station (BS)", "radio base station", "fixed station", "node", "access point", "transmission point (TP)", "reception point (RP)", "transmission/reception point (TRP)", "panel", "antenna panel", "antenna array", "cell", "macro cell", "small cell", "femto cell", "pico cell", "sector", "cell group", "carrier", "component carrier", "bandwidth part (BWP)" can be interchanged.

In some embodiments, terms such as "terminal", "terminal device", "user equipment (UE)", "user terminal", "mobile station (MS)", "mobile terminal (MT)", "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client" can be interchanged.

In some embodiments, a device may refer to a device on the ground, such as an access network device and/or a core network device on the ground; it may also refer to a device on a satellite, such as an access network device and/or a core network device on a satellite. Embodiments of the present disclosure do not limit whether the device is a device on the ground or a device on a satellite, nor do they limit whether the device refers to an access network device or a core network device.

In some embodiments, an access network device, a core network device, or a network device may be replaced by a terminal. For example, for a structure in which communication between an access network device, a core network device, or a network device and a terminal is replaced by communication between multiple terminals (e.g., also referred to as device-to-device (D2D), vehicle-to-everything (V2X), etc.), the various embodiments of the present disclosure can also be applied. In this case, the terminal may also be configured to have all or partial functions of the access network device. In addition, expressions such as "uplink" and "downlink" can also be replaced by expressions corresponding to communication between terminals (e.g., "side"). For example, an uplink channel, a downlink channel, etc. can be replaced by a sidelink channel; and an uplink, a downlink, etc. can be replaced by a sidelink.

In some embodiments, a terminal may be replaced by an access network device, a core network device, or a network device. In this case, the access network device, the core network device, or the network device may also be configured to have all or partial functions of the terminal.

In some embodiments, terms such as "up", "uplink", "physical uplink" can be interchanged; terms such as "down", "downlink", "physical downlink" can be interchanged; terms such as "side", "sidelink", "side communication", "sidelink communication", "direct", "direct link", "direct communication", "direct link communication" can be interchanged.

In some embodiments, terms such as "downlink control information (DCI)", "downlink (DL) assignment", "DL DCI", "uplink (UL) grant", "UL DCI" can be interchanged.

In some embodiments, terms such as "physical downlink shared channel (PDSCH)", "DL data" can be interchanged; terms such as "physical uplink shared channel (PUSCH)", "UL data" can be interchanged.

In some embodiments, terms such as "obtain", "acquire", "get", "receive", "transmit", "bidirectional transmission", "send and/or receive" can be interchanged, and can be interpreted as receiving from other entities, obtaining from a protocol, obtaining through self-processing, implementing autonomously, etc.

In some embodiments, terms such as "send", "issue", "report", "deliver", "transmit", "bidirectional transmission", "send and/or receive" can be interchanged.

In some embodiments, "predetermined", "preset" can be interpreted as pre-defined in a protocol, etc., or can be interpreted as an apparatus performing a preset action.

In some embodiments, obtaining data, information, etc. may comply with the laws and regulations of the country where it is located.

In some embodiments, data, information, etc. may be obtained after obtaining user consent.

In addition, each element, each row, or each column in the tables of some embodiments of the present disclosure can be implemented as an independent embodiment, and any combination of any element, any row, any column can also be implemented as an independent embodiment.

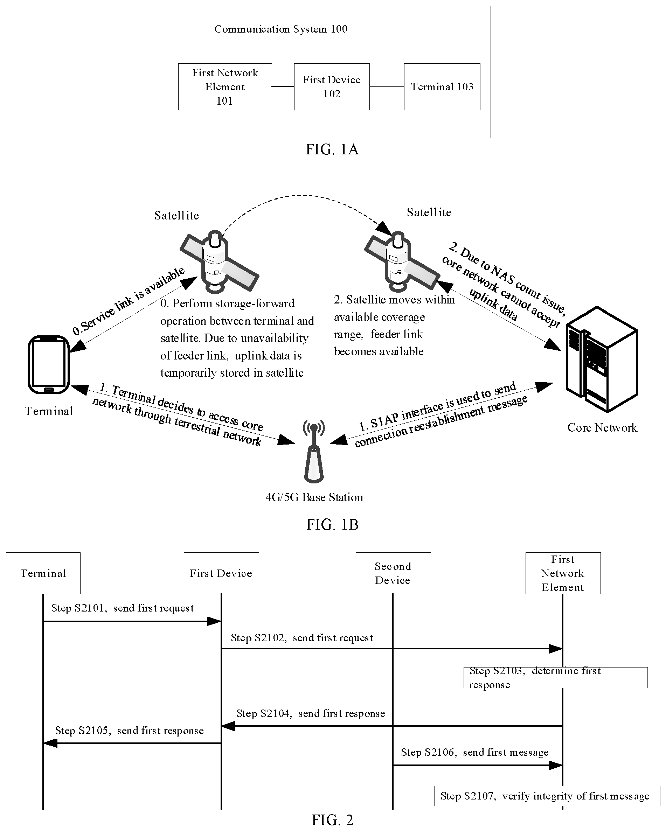

FIG. 1A is an exemplary schematic diagram illustrating an architecture of a communication system according to some embodiments of the present disclosure. As shown in FIG. 1A, a communication system 100 includes a first network element 101, a first device 102, and a terminal 103.

In some embodiments, a terminal includes, for example, at least one of a mobile phone, a wearable device, an Internet of Things device, an automobile with communication capability, a smart car, a tablet (Pad), a computer with wireless transceiver capability, a virtual reality (VR) terminal device, an augmented reality (AR) terminal device, a wireless terminal device in industrial control, a wireless terminal device in self-driving, a wireless terminal device in remote medical surgery, a wireless terminal device in smart grid, a wireless terminal device in transportation safety, a wireless terminal device in smart city, a wireless terminal device in smart home, but is not limited thereto. It can be understood that the communication system described in some embodiments of the present disclosure is for more clearly illustrating the technical solutions of some embodiments of the present disclosure, and does not constitute a limitation on the technical solutions according to some embodiments of the present disclosure. Those of ordinary skill in the art will know that, with the evolution of system architecture and the emergence of new service scenarios, the technical solutions according to some embodiments of the present disclosure are equally applicable to similar technical problems. The following embodiments of the present disclosure can be applied to the communication system 100 shown in FIG. 1A, or part of the entities therein, but are not limited thereto. The entities shown in FIG. 1A are illustrative; the communication system may include all or part of the entities in FIG. 1A, or may include other entities not shown in FIG. 1A; the number and form of each entity are arbitrary; the connection relationships between entities are illustrative; entities may be unconnected or connected; and the connection may be in any manner, direct or indirect, wired or wireless.

Various embodiments of the present disclosure can be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 5th generation mobile communication system-Advanced (5G-Advanced), 6th generation mobile communication system (6G), 5G New Radio (NR), Future Radio Access (FRA), New-Radio Access Technology (RAT), New Radio (NR), New radio access (NX), Future generation radio access (FX), Global System for Mobile communications (GSM^{TM}), CDMA2000, Ultra Mobile Broadband (UMB), IEEE 802.11 (Wi-Fi^{TM}), IEEE 802.16 (WiMAX^{TM}), IEEE 802.20, Ultra-WideBand (UWB), Bluetooth^{TM}, Public Land Mobile Network (PLMN) network, Device-to-Device (D2D) system, Machine to Machine (M2M) system, Internet of Things (IoT) system, Vehicle-to-Everything (V2X), systems using other communication methods, next-generation systems extended based on them, etc. In addition, multiple systems can also be combined (e.g., a combination of LTE or LTE-A and 5G, etc.).

In some embodiments, NAS COUNT is introduced in LTE and 5G systems to withstand replay attacks. A non-access stratum count (NAS COUNT) consists of two parts, namely: an 8-bit NAS sequence number (NAS SQN) contained in a NAS (NAS) message, corresponding to the least significant 8 bits of the NAS COUNT; and a 16-bit NAS overflow (NAS OVERFLOW) maintained synchronously between a UE and a network, corresponding to the most significant 16 bits of the NAS COUNT.

In some embodiments, the correct security handling of NAS OVERFLOW and NAS COUNT for an incoming NAS message by a receiving entity is as follows: if a receiving entity's RECEIVED NAS SQN is higher than the entity's STORED NAS SQN, then the entity generates a NAS count used for integrity verification as (STORED NAS OVERFLOW)||(RECEIVED NAS SQN), and uses this NAS count to verify the integrity of the NAS message. If the integrity verification is successful, the receiving entity should accept the NAS message and update its STORED NAS SQN to be equal to RECEIVED NAS SQN; otherwise, the receiving entity will reject the NAS message. If an entity's RECEIVED NAS SQN is less than or equal to its STORED NAS SQN value, then it generates a NAS count used for integrity verification as (STORED NAS OVERFLOW+1)||(RECEIVED NAS SQN), and uses this NAS count to verify the integrity of the NAS message. If the integrity verification is successful, the receiving entity should accept the NAS message, update its STORED NAS SQN to RECEIVED NAS SQN, and increment its STORED NAS OVERFLOW; otherwise, the receiving entity will reject the NAS message.

In some embodiments, in a store-and-forward service operation, a service link between a terminal and a satellite and a feeder link between the satellite and a non-terrestrial network (NTN) gateway may not be available at the same time. If the service link is available but the feeder link is unavailable, the satellite may temporarily store uplink (UL) data sent in a NAS message from the terminal, and forward the UL data in the NAS message to the core network until the feeder link becomes available.

In some embodiments, due to satellite movement, the terminal may detect that the signal strength from a 5G base station or a 4G base station (the next Generation Node B/Evolved NodeB, gNB/eNB) in a terrestrial network (TN) is better, and decide to establish a connection with the core network via the 5G base station or the 4G base station of the terrestrial network. In this case, if the connection between the terminal and the core network via the 5G base station or the 4G base station of the terrestrial network is successful, the UL data later forwarded via the satellite cannot be accepted by the core network due to integrity verification failure. This is because after the connection establishment process is accepted, the NAS COUNT maintained in the Access and Mobility Management Function/Mobility Management Entity (MME/AMF) will be updated to the latest value. When the satellite later forwards the UL data in a NAS message, the MME/AMF cannot construct the correct estimated NAS COUNT, and due to the NAS COUNT being out of synchronization, the integrity of the NAS message cannot be successfully verified.

FIG. 1B is an exemplary schematic diagram showing a terminal switching from a device of a non-terrestrial network to a device of a terrestrial network to access a core network according to some embodiments of the present disclosure. As shown in FIG. 1B, in step 0, a service link between the terminal and a satellite is available, and a store-and-forward operation is performed between the terminal and the satellite; since the feeder link of the satellite is unavailable, the satellite temporarily stores uplink data that has not yet been sent to the core network. In step 1, the terminal detects that the signal strength from a 4G/5G base station in the terrestrial network is better, and decides to establish a connection with the 4G/5G base station of the terrestrial network. At this time, the terminal sends a connection re-establishment message to the 4G/5G base station, and the 4G/5G base station forwards the connection re-establishment message to the core network via the S1AP interface. The core network accepts the connection re-establishment, and the terminal establishes a communication connection with the 4G/5G base station. The core network receives the NAS message sent by the terminal, and updates its stored NAS COUNT according to the NAS SQN carried in the NAS message. In step 2, when the satellite moves into an available coverage area, the feeder link of the satellite becomes available. At this time, the satellite sends the temporarily stored uplink data to the core network. Since the NAS COUNT stored in the core network itself has already been updated, the uplink data sent by the satellite cannot be accepted by the core network because of integrity verification failure.

FIG. 2 is an interaction schematic diagram of a communication method according to some embodiments of the present disclosure. As shown in FIG. 2, some embodiments of the present disclosure relates to a communication method, used for a communication system 100 and includes:
Step S2101, a terminal sends a first request to a first device.

In some embodiments, the terminal accesses a first network element via a second device of a non-terrestrial network.

For example: the terminal sends a first message to the second device, where the first message includes uplink data sent by the terminal to the first network element; if a feeder link exists between the second device and an NTN gateway, the second device forwards the uplink data sent by the terminal to the first network element to the NTN gateway via the feeder link, and then the NTN gateway sends the uplink data to the first network element. If the feeder link corresponding to the second device is unavailable, the second device temporarily stores the uplink data sent by the terminal to the first network element; after the feeder link is restored, the second device forwards the uplink data sent by the terminal to the first network element to the NTN gateway via the feeder link, and then the NTN gateway sends the uplink data to the first network element.

Optionally, in some embodiments of the present disclosure, the first network element may be a network element of a core network, including but not limited to: an MME network element, an AMF network element; the first device is a device of a terrestrial network, including but not limited to: a 4G base station, a 5G base station, a 6G base station; the second device is a device of a non-terrestrial network, for example: a network device on a satellite, which may be an access network device, or may be an access network device and a core network device. Some embodiments of the present disclosure do not limit the specific types of the first network element, the first device, and the second device.

Optionally, after the terminal sends the first message to the second device, if the feeder link is disconnected, the second device temporarily stores the uplink data sent by the terminal. Subsequently, due to mobility, when the second device leaves the coverage area of the terminal, it disconnects the communication connection with the terminal.

In some embodiments, when the terminal satisfies a second condition, it determines to establish a communication connection with the first network element through the first device, the second condition including at least one of the following:
a signal from the first device of the terrestrial network is stronger than a signal from the second device of the non-terrestrial network;
a feeder link corresponding to the second device is unavailable.

In some embodiments, when the terminal satisfies the second condition, it sends a first request to the first device, the first request being used to request establishment of a communication connection with the first network element through the first device.

In some embodiments, the first request further includes a first NAS sequence number.

Step S2102, the first device sends the first request to the first network element.

In some embodiments, after receiving the first request, the first device sends the first request to the first network element, the first request being used to request establishment of a communication connection with the first network element through the first device.

Step S2103, the first network element determines a first response.

In some embodiments, after receiving the first request, the first network element obtains at least one of pre-stored cell information and a first indication in the context information of the terminal, and determines, according to at least one of the cell information and the first indication, whether the terminal satisfies a first condition, the first condition including that the terminal is allowed to perform a store-and-forward operation, or that the terminal is allowed to be in a store-and-forward operation.

In some embodiments, the cell information is used to indicate an area covered by a last device having a connection relationship with the terminal; the first indication is used to indicate that the terminal is allowed to perform the store-and-forward operation, or that the terminal is allowed to be in the store-and-forward operation.

Optionally, if the first indication exists in the context information of the terminal, it can be determined that the terminal satisfies the first condition.

Optionally, according to the cell information, the last device having the connection relationship with the terminal is determined; if the device is a non-terrestrial device, it can also be determined that the terminal satisfies the first condition.

For example: according to the cell information, the last device having the connection relationship with the terminal can be determined; if the device is a non-terrestrial device, for example: a base station on a satellite, then it can be determined that the terminal satisfies the first condition; conversely, if the device is a terrestrial device, including but not limited to: a terrestrial 4G base station, 5G base station, 6G base station, then it is determined that the terminal does not satisfy the first condition.

It should be noted that, in some embodiments of the present disclosure, if it is determined according to the cell information that the last device having the connection relationship with the terminal is a non-terrestrial device and/or the context information of the terminal stores the first indication, it can be determined that the terminal satisfies the first condition.

In some embodiments, the first condition is further determined by at least one of the following, including:
a first difference is greater than a preset threshold, the first difference being a difference between a first NAS sequence number and a second NAS sequence number, the second NAS sequence number being determined by a first NAS count;
a feeder link corresponding to the second device is unavailable.

It should be noted that the first network element pre-stores a first NAS count of the terminal, the first NAS count including a NAS sequence number of the least significant 8 bits and a NAS OVERFLOW of the most significant 16 bits; in some embodiments of the present disclosure, the NAS sequence number of the least significant 8 bits of the first NAS count is used as the second NAS sequence number.

It should also be noted that, in some embodiments of the present disclosure, if the first difference is less than or equal to the threshold and/or the feeder link corresponding to the second device is available, it indicates that the terminal does not satisfy the first condition.

Optionally, in some embodiments of the present disclosure, the preset threshold may be set by a device deployer or an operator, configured in the first network element, for determining whether the cause of the first difference is link packet loss due to poor link conditions or partial uplink data being temporarily stored on the second device. Some embodiments of the present disclosure do not limit the specific value of the preset threshold.

Optionally, in some embodiments of the present disclosure, the second NAS count is also referred to as a store-and-forward NAS count S&F NAS COUNT; thus, the first NAS count NAS COUNT stored in the context information of the terminal and the S&F NAS COUNT are independent of each other; when the value of NAS COUNT is updated, it does not affect the value of S&F NAS COUNT.

In some embodiments, when the terminal satisfies the first condition, at least one of the S&F NAS COUNT and a first cell identifier is additionally stored in the context information of the terminal, and a first response is determined, the first response indicating that the first network element accepts the terminal establishing a communication connection with the first network element through the first device.

In some embodiments, the first cell identifier is a cell identifier having a mapping relationship with the last non-terrestrial device having a connection relationship with the terminal.

In some optional embodiments, the first cell identifier is a cell identifier having a mapping relationship with the second device.

Optionally, in some embodiments of the present disclosure, the first cell identifier includes but is not limited to: a 4G base station identifier (eNodeB Identifier, eNB ID), a 5G base station identifier (the next Generation Node B Identifier, gNB ID), a cell identifier (cell ID), a mapped cell identifier (mapped cell ID).

In some embodiments, when the terminal does not satisfy the first condition, at least one of the S&F NAS COUNT and the first cell identifier is not stored in the context information of the terminal, and the first response is directly determined, the first response indicating that the first network element accepts the terminal establishing a communication connection with the first network element through the first device.

In some embodiments, after determining the first response, the first network element sends the first response to the first device, the first response indicating that the first network element accepts the terminal establishing a communication connection with the first network element through the first device.

In some embodiments of the present disclosure, when the terminal satisfies the first condition, by storing the S&F NAS COUNT in the context information of the terminal, the NAS COUNT and the S&F NAS COUNT stored in the context information of the terminal are independent of each other; thus, when the second device sends the temporarily stored uplink data to the first network element via a first message after the corresponding feeder link becomes available, the first network element can use the stored S&F NAS COUNT to verify the integrity of the first message.

Step S2104, the first network element sends a first response to the first device.

In some embodiments, the first network element sends the first response to the first device, the first response indicating that the first network element accepts the terminal establishing a communication connection with the first network element through the first device.

Step S2105, the first device sends the first response to the terminal.

In some embodiments, after receiving the first response sent by the first network element, the first device sends the first response to the terminal, the first response indicating that the first network element accepts the terminal establishing a communication connection with the first network element through the first device.

In some optional embodiments, after receiving the first response, the terminal establishes a communication connection with the first network element through the first device.

Step S2106, the second device sends a first message to the first network element.

In some embodiments, after the corresponding feeder link becomes available, the second device sends a first message to the first network element, the first message including a second cell identifier and a third NAS sequence number, where the second cell identifier has a mapping relationship with the second device.

In some embodiments, the first message further includes uplink data sent by the terminal that was temporarily stored in the second device when the feeder link corresponding to the second device was unavailable; in some embodiments of the present disclosure, the uplink data sent by the terminal is also referred to as first data.

Step S2107, the first network element verifies the integrity of the first message.

In some optional embodiments, after the first network element receives the first message sent by the second device, if the identifier of the first cell is stored in the context information of the terminal, it is also necessary to determine whether the first cell identifier and the second cell identifier are the same; if they are the same, then further verifying the integrity of the first message using the integrity verification algorithm; if they are not the same, it indicates that the device sending the first message is not the second device, and there is no need to verify the integrity of the first message using the integrity verification algorithm, and the first message is directly discarded.

In some optional embodiments, when the terminal does not satisfy the first condition, the identifier of the first cell is not stored in the context information of the terminal; after the first network element receives the first message sent by the second device, it obtains the cell identifier having a mapping relationship with the last non-terrestrial device accessed by the terminal from the context information of the terminal; if the cell identifier and the second cell identifier are the same, then further verifying the integrity of the first message using the integrity verification algorithm; if the cell identifier and the second cell identifier are not the same, there is no need to verify the integrity of the first message using the integrity verification algorithm, and the first message is directly discarded.

In some embodiments, based on the third NAS sequence number and the S&F NAS COUNT stored in the context information of the terminal, the input of the integrity verification algorithm is obtained, and the integrity of the first message is verified. If the integrity verification of the first message is successful, the first network element accepts the first message; if the integrity verification of the first message fails, the first network element rejects the first message.

In some optional embodiments, the integrity of the first message can be verified in the following manner, including:
obtaining the S&F NAS COUNT stored in the context information of the terminal, where the least significant 8 bits of the S&F NAS COUNT are used as STORED NAS SQN, the most significant 16 bits are used as STORED NAS OVERFLOW, and the third NAS sequence number is used as RECEIVED NAS SQN.

If the value of RECEIVED NAS SQN is greater than the value of STORED NAS SQN, the first network element generates a NAS count used for integrity verification as (STORED NAS OVERFLOW)||(RECEIVED NAS SQN), and verifies the integrity of the first message. If the integrity verification of the first message passes, the first network element accepts the first message and updates the value of STORED NAS SQN to the value of RECEIVED NAS SQN; otherwise, the first network element rejects the first message.

If the value of RECEIVED NAS SQN is less than or equal to the value of STORED NAS SQN, the first network element generates a NAS count used for integrity verification as (STORED NAS OVERFLOW+1)||(RECEIVED NAS SQN), and verifies the integrity of the first message. If the integrity verification of the first message passes, the first network element accepts the first message, updates the value of STORED NAS SQN to the value of RECEIVED NAS SQN, and simultaneously increments the value of STORED NAS OVERFLOW by 1; otherwise, the first network element rejects the first message.

In some optional embodiments, if at least one of the S&F NAS COUNT and the first cell identifier is additionally stored in the context information of the terminal, then after the first network element accepts the first data stored by the second device, it further includes deleting at least one of the S&F NAS COUNT and the first cell identifier additionally stored in the context information of the terminal.

It should be noted that if both the S&F NAS COUNT and the first cell identifier are stored in the context information of the terminal, after the first network element accepts the first data stored by the second device, both are deleted; if only one of the S&F NAS COUNT and the first cell identifier is stored, after the first network element accepts the first data stored by the second device, only the stored one needs to be deleted.

In some embodiments of the present disclosure, after the first network element receives the first request sent by the first device, it sends a first response to the first device, the first response indicating that the first network element accepts the terminal establishing a communication connection with the first network element through the first device; after receiving the first response, the terminal can establish a communication connection with the first network element through the first device. In some embodiments of the present disclosure, when the terminal satisfies the second condition, the terminal determines to establish a communication connection with the core network through a device of the terrestrial network, and sends a first request to the core network for requesting establishment of a communication connection with the core network through the device of the terrestrial network; the core network determines a first response for indicating acceptance of the terminal accessing the core network through the device of the non-terrestrial network, solving the technical problem that the terminal cannot switch from accessing the core network through a device of the non-terrestrial network to accessing the core network through a device of the terrestrial network.

In some embodiments, reference may be made to other optional implementations described before or after the description corresponding to FIG. 2.

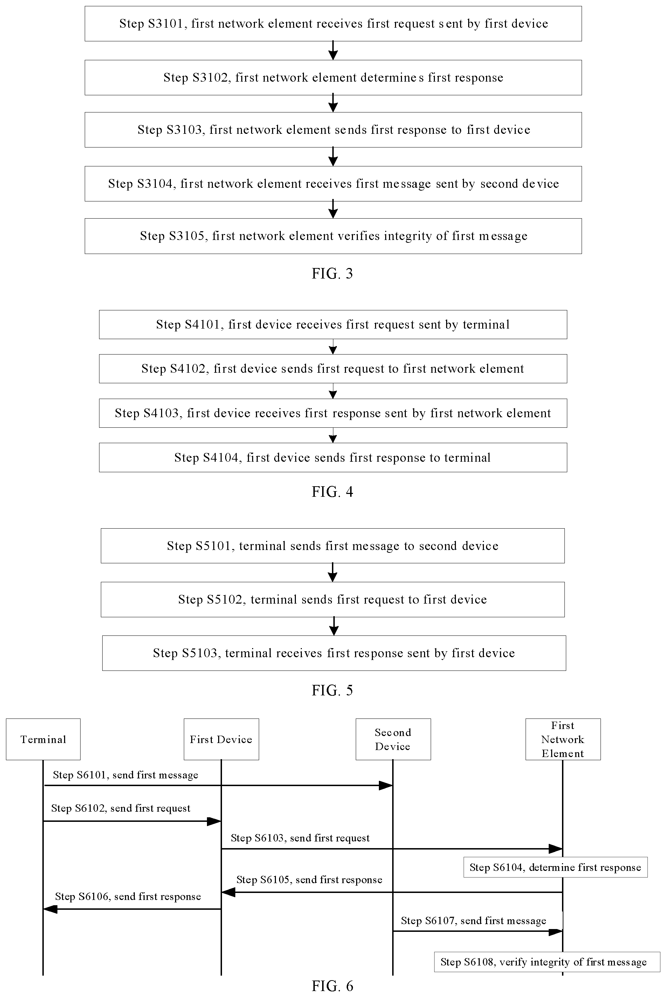

FIG. 3 is a schematic flowchart of a communication method according to some embodiments of the present disclosure. As shown in FIG. 3, some embodiments of the present disclosure relates to a first network element 101 and includes:
Step S3101, the first network element receives a first request sent by a first device.

Optional implementations of step S3101 may be found in the optional implementations of step S2102 of FIG. 2 and other related parts of some embodiments involved in FIG. 2, which will not be repeated here.

In some embodiments, the first device sends a first request to the first network element, the first request being sent to the first device when the terminal releases a connection with a second device and determines to establish a communication connection with the first network element through the first device, the first request being used to request establishment of a communication connection with the first network element through the first device.

Optionally, in some embodiments of the present disclosure, the first network element may be a network element of a core network, including but not limited to: an MME network element, an AMF network element; the first device is a device of a terrestrial network, including but not limited to: a 4G base station, a 5G base station, a 6G base station; the second device is a device of a non-terrestrial network, for example: a network device on a satellite, which may be an access network device, or may be an access network device and a core network device. Some embodiments of the present disclosure do not limit the specific types of the first network element, the first device, and the second device.

In some embodiments, the first request further includes a first NAS sequence number.

Step S3102, the first network element determines a first response.

Optional implementations of step S3102 may be found in the optional implementations of step S2103 of FIG. 2 and other related parts of some embodiments involved in FIG. 2, which will not be repeated here.

In some embodiments, when the terminal satisfies a first condition, at least one of an S&F NAS COUNT and a first cell identifier is stored in the context information of the terminal, and a first response is determined, the first response indicating that the first network element accepts the terminal establishing a communication connection with the first network element through the first device.

In some embodiments, when the terminal does not satisfy the first condition, at least one of the S&F NAS COUNT and the first cell identifier is not stored in the context information of the terminal, and the first response is directly determined, the first response indicating that the first network element accepts the terminal establishing a communication connection with the first network element through the first device.

It should be understood that, in some embodiments of the present disclosure, after receiving the first request, the first network element determines a first response, the first response indicating that the first network element accepts the terminal establishing a communication connection with the first network element through the first device; it should be noted that when the terminal satisfies the first condition, the first network element stores at least one of the S&F NAS COUNT and the first cell identifier in the context information of the terminal; when the terminal does not satisfy the first condition, the first response is directly determined, without storing at least one of the S&F NAS COUNT and the first cell identifier in the context information of the terminal.

Step S3103, the first network element sends the first response to the first device.

Optional implementations of step S3103 may be found in the optional implementations of step S2104 of FIG. 2 and other related parts of some embodiments involved in FIG. 2, which will not be repeated here.

In some embodiments, the first network element sends the first response to the first device, the first response indicating that the first network element accepts the terminal establishing a communication connection with the first network element through the first device.

Step S3104, the first network element receives a first message sent by the second device.

Optional implementations of step S3104 may be found in the optional implementations of step S2106 of FIG. 2 and other related parts of some embodiments involved in FIG. 2, which will not be repeated here.

In some embodiments, a first message sent by the second device is received.

Optionally, the first message includes a second cell identifier and a third NAS sequence number, the second cell identifier having a mapping relationship with the second device.

Optionally, the first message further includes uplink data sent by the terminal that was temporarily stored in the second device when the feeder link of the second device was unavailable.

Step S3105, the first network element verifies the integrity of the first message.

Optional implementations of step S3105 may be found in the optional implementations of step S2107 of FIG. 2 and other related parts of some embodiments involved in FIG. 2, which will not be repeated here.

In some optional embodiments, after the first network element receives the first message sent by the second device, if the identifier of the first cell is stored in the context information of the terminal, it is also necessary to determine whether the first cell identifier and the second cell identifier are the same; if they are the same, then further verifying the integrity of the first message using the integrity verification algorithm; if they are not the same, it indicates that the device sending the first message is not the second device, and the first message is discarded.

In some optional embodiments, when the terminal does not satisfy the first condition, the identifier of the first cell is not stored in the context information of the terminal; after the first network element receives the first message sent by the second device, it obtains the cell identifier having a mapping relationship with the last non-terrestrial device accessed by the terminal from the context information of the terminal; if the cell identifier and the second cell identifier are the same, then further verifying the integrity of the first message using the integrity verification algorithm; if the cell identifier and the second cell identifier are not the same, there is no need to verify the integrity of the first message using the integrity verification algorithm, and the first message is directly discarded.

In some embodiments, based on the third NAS sequence number and the S&F NAS COUNT stored in the context information of the terminal, the input of the integrity verification algorithm is obtained, and the integrity of the first message is verified. If the integrity verification of the first message is successful, the first network element accepts the first message; if the integrity verification of the first message fails, the first network element rejects the first message.

In some optional embodiments, if at least one of the S&F NAS COUNT and the first cell identifier is additionally stored in the context information of the terminal, then after the first network element accepts the first data stored by the second device, it further includes deleting at least one of the S&F NAS COUNT and the first cell identifier additionally stored in the context information of the terminal.

FIG. 4 is a schematic flowchart of a communication method according to some embodiments of the present disclosure. As shown in FIG. 4, some embodiments of the present disclosure relates to a first device 102 and includes:
Step S4101, the first device receives a first request sent by a terminal.

Optional implementations of step S4101 may be found in the optional implementations of step S2101 of FIG. 2 and other related parts of some embodiments involved in FIG. 2, which will not be repeated here.

In some embodiments, the first device receives a first request sent by the terminal, the first request being sent to the first device when the terminal, after releasing a connection with a second device, determines to establish a communication connection with the first network element through the first device; the first request is used to request establishment of a communication connection with the first network element through the first device.

In some embodiments, the first request further includes a first NAS sequence number.

Step S4102, the first device sends the first request to the first network element.

Optional implementations of step S4102 may be found in the optional implementations of step S2102 of FIG. 2 and other related parts of some embodiments involved in FIG. 2, which will not be repeated here.

In some embodiments, after receiving the first request, the first device sends the first request to the first network element, the first request being used to request establishment of a communication connection with the first network element through the first device.

Step S4103, the first device receives a first response sent by the first network element.

Optional implementations of step S4103 may be found in the optional implementations of step S2104 of FIG. 2 and other related parts of some embodiments involved in FIG. 2, which will not be repeated here.

In some embodiments, a first response sent by the first network element is received, the first response indicating that the first network element accepts the terminal establishing a communication connection with the first network element through the first device.

Step S4104, the first device sends the first response to the terminal.

Optional implementations of step S4104 may be found in the optional implementations of step S2105 of FIG. 2 and other related parts of some embodiments involved in FIG. 2, which will not be repeated here.

In some embodiments, the first device sends the first response to the terminal, the first response indicating that the first network element accepts the terminal establishing a communication connection with the first network element through the first device.

In some optional embodiments, after receiving the first response, the terminal establishes a communication connection with the first network element through the first device.

FIG. 5 is a schematic flowchart of a communication method according to some embodiments of the present disclosure. As shown in FIG. 5, some embodiments of the present disclosure relates to a terminal 103 and includes:
Step S5101, the terminal sends a first message to a second device.

Optional implementations of step S5101 may be found in the optional implementations of step S2101 of FIG. 2 and other related parts of some embodiments involved in FIG. 2, which will not be repeated here.

In some embodiments, the terminal accesses a first network element through a second device of a non-terrestrial network, and the terminal sends a first message to the second device, where the first message includes uplink data; a feeder link exists between the second device and an NTN gateway, and the second device forwards the uplink data sent by the terminal to the NTN gateway via the feeder link, and then the NTN gateway sends the received uplink data to the first network element.

Optionally, after the terminal sends the first message to the second device, if the feeder link is disconnected, the second device temporarily stores the uplink data sent by the terminal. Subsequently, due to mobility, when the second device leaves the coverage area of the terminal, it disconnects the communication connection with the terminal.

Step S5102, the terminal sends a first request to the first device.

Optional implementations of step S5102 may be found in the optional implementations of step S2101 of FIG. 2 and other related parts of some embodiments involved in FIG. 2, which will not be repeated here.

In some embodiments, the terminal satisfies a second condition, and determines to establish a communication connection with the first network element through the first device, the second condition including at least one of the following:
a signal from the first device of the terrestrial network is stronger than a signal from the second device of the non-terrestrial network;
a feeder link corresponding to the second device is unavailable.

In some embodiments, when the terminal satisfies the second condition, it sends a first request to the first device, the first request being used to request establishment of a communication connection with the first network element through the first device.

In some embodiments, the first request further includes a first NAS sequence number.

Step S5103, the terminal receives a first response sent by the first device.

Optional implementations of step S5103 may be found in the optional implementations of step S2105 of FIG. 2 and other related parts of some embodiments involved in FIG. 2, which will not be repeated here.

In some embodiments, a first response sent by the first device is received, the first response indicating that the first network element accepts the terminal establishing a communication connection with the first network element through the first device.

In some optional embodiments, after receiving the first response, the terminal establishes a communication connection with the first network element through the first device.

FIG. 6 is an interaction schematic diagram of a communication method according to some embodiments of the present disclosure. As shown in FIG. 6, some embodiments of the present disclosure relates to a communication method, used for a communication system 100 and includes:
Step S6101, the terminal sends a first message to a second device.

Optional implementations of step S6101 may be found in the optional implementations of step S2101 of FIG. 2, step S5101 of FIG. 5, and other related parts of some embodiments involved in FIG. 2 and FIG. 5, which will not be repeated here.

In some embodiments, the terminal accesses a first network element through a second device of a non-terrestrial network, and the terminal sends a first message to the second device, where the first message includes uplink data; a feeder link exists between the second device and an NTN gateway, and the second device forwards the uplink data sent by the terminal to the NTN gateway via the feeder link, and then the NTN gateway sends the received uplink data to the first network element.

In some embodiments, when the feeder link between the second device and the NTN gateway is unavailable, the second device temporarily stores the uplink data sent by the terminal.

Step S6102, the terminal sends a first request to the first device.

Optional implementations of step S6102 may be found in the optional implementations of step S2101 of FIG. 2, step S4101 of FIG. 4, step S5102 of FIG. 5, and other related parts of some embodiments involved in FIG. 2, FIG. 4, and FIG. 5, which will not be repeated here.

In some embodiments, when the terminal satisfies a second condition, it determines to establish a communication connection with the first network element through the first device, the second condition including at least one of the following:
a signal from the first device of the terrestrial network is stronger than a signal from the second device of the non-terrestrial network;
a feeder link of the second device is unavailable.

In some embodiments, when the terminal satisfies the second condition, it sends a first request to the first device, the first request being used to request establishment of a communication connection with the first network element through the first device.

In some embodiments, the first request further includes a first NAS sequence number.

Step S6103, the first device sends the first request to the first network element.

Optional implementations of step S6103 may be found in the optional implementations of step S2102 of FIG. 2, step S3101 of FIG. 3, step S4102 of FIG. 4, and other related parts of some embodiments involved in FIG. 2, FIG. 3, and FIG. 4, which will not be repeated here.

In some embodiments, after receiving the first request, the first device sends the first request to the first network element, the first request being used to request establishment of a communication connection with the first network element through the first device.

Step S6104, the first network element determines a first response.

Optional implementations of step S6104 may be found in the optional implementations of step S2103 of FIG. 2, step S3102 of FIG. 3, and other related parts of some embodiments involved in FIG. 2 and FIG. 3, which will not be repeated here.

In some embodiments, when the terminal satisfies a first condition, at least one of an S&F NAS COUNT and a first cell identifier is stored in the context information of the terminal, and a first response is determined, the first response indicating that the first network element accepts the terminal establishing a communication connection with the first network element through the first device.

In some embodiments, when the terminal does not satisfy the first condition, at least one of the S&F NAS COUNT and the first cell identifier is not stored in the context information of the terminal, and the first response is directly determined, the first response indicating that the first network element accepts the terminal establishing a communication connection with the first network element through the first device.

Step S6105, the first network element sends the first response to the first device.

Optional implementations of step S6105 may be found in the optional implementations of step S2104 of FIG. 2, step S3103 of FIG. 3, step S4103 of FIG. 4, and other related parts of some embodiments involved in FIG. 2, FIG. 3, and FIG. 4, which will not be repeated here.

In some embodiments, the first network element sends the first response to the first device, the first response indicating that the first network element accepts the terminal establishing a communication connection with the first network element through the first device.

Step S6106, the first device sends the first response to the terminal.

Optional implementations of step S6106 may be found in the optional implementations of step S2105 of FIG. 2, step S4104 of FIG. 4, step S5103 of FIG. 5, and other related parts of some embodiments involved in FIG. 2, FIG. 4, and FIG. 5, which will not be repeated here.

In some embodiments, the first device sends the first response to the terminal, the first response indicating that the first network element accepts the terminal establishing a communication connection with the first network element through the first device.

In some optional embodiments, after receiving the first response, the terminal establishes a communication connection with the first network element through the first device.

Step S6107, the second device sends a first message to the first network element.

Optional implementations of step S6107 may be found in the optional implementations of step S2106 of FIG. 2, step S3104 of FIG. 3, and other related parts of some embodiments involved in FIG. 2 and FIG. 3, which will not be repeated here.

In some embodiments, after the feeder link becomes available, the second device sends a first message to the first network element, the first message including a second cell identifier and a third NAS sequence number, the second cell identifier having a mapping relationship with the second device.

In some embodiments, the first message further includes uplink data sent by the terminal that was temporarily stored by the second device.

Step S6108, the first network element verifies the integrity of the first message.

Optional implementations of step S6108 may be found in the optional implementations of step S2107 of FIG. 2, step S3105 of FIG. 3, and other related parts of some embodiments involved in FIG. 2 and FIG. 3, which will not be repeated here.

In some optional embodiments, after the first network element receives the first message sent by the second device, if the identifier of the first cell is stored in the context information of the terminal, it is also necessary to determine whether the first cell identifier and the second cell identifier are the same; if they are the same, then verifying the integrity of the first message using the integrity verification algorithm; if they are not the same, it indicates that the device sending the first message is not the second device, and there is no need to verify the integrity of the first message using the integrity verification algorithm, and the first message is directly discarded.

In some optional embodiments, when the terminal does not satisfy the first condition, the identifier of the first cell is not stored in the context information of the terminal; after the first network element receives the first message sent by the second device, it obtains the cell identifier having a mapping relationship with the last non-terrestrial device accessed by the terminal from the context information of the terminal; if the cell identifier and the second cell identifier are the same, then further verifying the integrity of the first message using the integrity verification algorithm; if the cell identifier and the second cell identifier are not the same, there is no need to verify the integrity of the first message using the integrity verification algorithm, and the first message is directly discarded.

In some embodiments, based on the third NAS sequence number and the S&F NAS COUNT stored in the context information of the terminal, the input of the integrity verification algorithm is obtained, and the integrity of the first message is verified. If the integrity verification of the first message is successful, the first network element accepts the first message; if the integrity verification of the first message fails, the first network element rejects the first message.

In some optional embodiments, if at least one of the S&F NAS COUNT and the first cell identifier is additionally stored in the context information of the terminal, then after the first network element accepts the first data stored by the second device, it further includes deleting at least one of the S&F NAS COUNT and the first cell identifier additionally stored in the context information of the terminal.

Some embodiments of the present disclosure also propose an apparatus for implementing any of the above methods. For example, an apparatus is proposed, the apparatus including units or modules for implementing the steps executed by the first network element 101 in any of the above methods. For another example, another apparatus is also proposed, including units or modules for implementing the steps executed by the first device 102 in any of the above methods.

It should be understood that the division of units or modules in the above apparatus is only a division of logical functions; in actual implementation, they may be entirely or partially integrated into one physical entity or physically separated. In addition, the units or modules in the apparatus may be implemented in the form of a processor invoking software: for example, the apparatus includes a processor, the processor is connected to a memory, the memory stores instructions, and the processor invokes the instructions stored in the memory to implement any of the above methods or implement the functions of each unit or module of the above apparatus, where the processor is, for example, a general-purpose processor, such as a central processing unit (CPU) or a microprocessor, and the memory is a memory inside or outside the apparatus. Alternatively, the units or modules in the apparatus may be implemented in the form of hardware circuits, and the functions of some or all of the units or modules may be implemented through the design of hardware circuits. The above hardware circuits may be understood as one or more processors; for example, in one implementation, the above hardware circuit is an application-specific integrated circuit (ASIC), which implements the functions of some or all of the above units or modules through the design of logical relationships of internal components; for another example, in another implementation, the above hardware circuit may be implemented by a programmable logic device (PLD), taking a field programmable gate array (FPGA) as an example, which may include a large number of logic gate circuits, and the connection relationships between the logic gate circuits are configured through configuration files, thereby implementing the functions of some or all of the above units or modules. All units or modules of the above apparatus may be implemented entirely in the form of a processor invoking software, or entirely in the form of hardware circuits, or partially in the form of a processor invoking software and the remaining part in the form of hardware circuits.

In some embodiments of the present disclosure, a processor is a circuit having signal processing capability. In one implementation, the processor may be a circuit having instruction reading and execution capability, such as a central processing unit (CPU), a microprocessor, a graphics processing unit (GPU) (which can be understood as a microprocessor), or a digital signal processor (DSP), etc. In another implementation, the processor may implement certain functions through logical relationships of hardware circuits, where the logical relationships of the hardware circuits are fixed or reconfigurable, for example, the processor is a hardware circuit implemented by an application-specific integrated circuit (ASIC) or a programmable logic device (PLD), such as an FPGA. In a reconfigurable hardware circuit, the process of the processor loading a configuration file to implement the configuration of the hardware circuit can be understood as the process of the processor loading instructions to implement the functions of some or all of the above units or modules. In addition, it may also be a hardware circuit designed for artificial intelligence, which can be understood as an ASIC, such as a neural network processing unit (NPU), a tensor processing unit (TPU), a deep learning processing unit (DPU), etc.

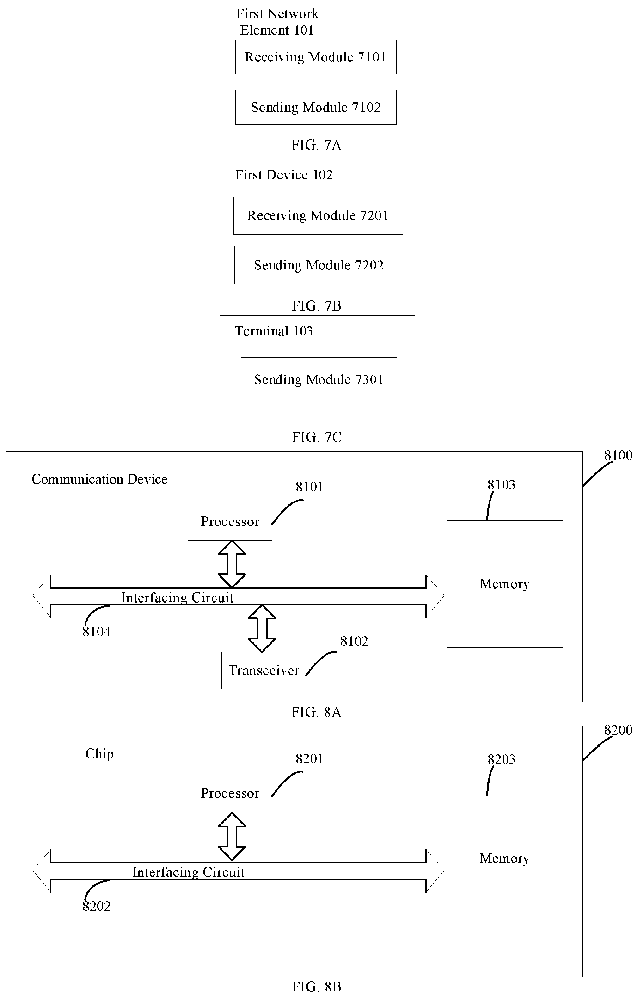

FIG. 7A is a schematic structural diagram of a first network element according to some embodiments of the present disclosure. As shown in FIG. 7A, the first network element may include: a receiving module 7101, a sending module 7102.

In some embodiments, the receiving module is configured to receive a first request sent by a first device, where the first request is sent to the first device when a terminal, after releasing a connection with a second device, determines to establish a communication connection with the first network element through the first device.

In some embodiments, the sending module is configured to send a first response to the first device according to the received first request; where the first device is a device of a terrestrial network; the second device is a device of a non-terrestrial network; the first response indicates acceptance of establishing the communication connection between the terminal and the first network element through the first device.

Optionally, the above receiving module is configured to perform communication steps such as sending and/or receiving performed by the terminal in any of the above methods, for example, step S3101, which will not be repeated here.

FIG. 7B is a schematic structural diagram of a first device according to some embodiments of the present disclosure. As shown in FIG. 7B, the first device may include: a receiving module 7201, a sending module 7202.

In some embodiments, the receiving module is configured to receive a first request sent by a terminal, where the first request is sent to the first device when the terminal, after releasing a connection with a second device, determines to establish a communication connection with a first network element through the first device.

In some embodiments, the sending module is configured to send the first request to the first network element; where the first device is a device of a terrestrial network; the second device is a device of a non-terrestrial network.

Optionally, the above receiving module is configured to perform communication steps such as sending and/or receiving performed by the terminal in any of the above methods, for example, step S4101, which will not be repeated here.

FIG. 7C is a schematic structural diagram of a terminal according to some embodiments of the present disclosure. As shown in FIG. 7C, the terminal may include: a sending module 7301.

In some embodiments, the sending module is configured to send a first request to a first device, where the first request is sent to the first device when the terminal, after releasing a connection with a second device, determines to establish a communication connection with a first network element through the first device; where the first device is a device of a terrestrial network; the second device is a device of a non-terrestrial network.

Optionally, the above sending module is configured to perform communication steps such as sending and/or receiving performed by the terminal in any of the above methods, for example, step S5101, which will not be repeated here.

FIG. 8A is a schematic structural diagram of a communication device 8100 according to some embodiments of the present disclosure. The communication device 8100 may be a device (e.g., an access network device, a core network device, etc.), or an Internet of Things device, or a chip, chip system, or processor that supports the device in implementing any of the above methods, or a chip, chip system, or processor that supports the Internet of Things device in implementing any of the above methods. The communication device 8100 may be used to implement the methods described in the above method embodiments, and details may be found in the description of the above method embodiments.

As shown in FIG. 8A, the communication device 8100 includes one or more processors 8101. The processor 8101 may be a general-purpose processor or a special-purpose processor, for example, a baseband processor or a central processing unit. The baseband processor may be used to process communication protocols and communication data, and the central processing unit may be used to control a communication apparatus (e.g., a base station, a baseband chip, a terminal device, a terminal device chip, a DU or a CU, etc.), execute a program, and process data of the program. Optionally, the communication device 8100 is used to perform any of the above methods. Optionally, the one or more processors 8101 are used to invoke instructions to cause the communication device 8100 to perform any of the above methods.

In some embodiments, the communication device 8100 further includes one or more transceivers 8102. When the communication device 8100 includes one or more transceivers 8102, the transceiver 8102 performs at least one of sending and/or receiving communication steps (e.g., step S2101, but not limited thereto) in the above methods, and the processor 8101 performs at least one of the other steps (e.g., step S2102, but not limited thereto). In optional embodiments, a transceiver may include a receiver and/or a transmitter, which may be separate or integrated. Optionally, terms such as transceiver, transceiving unit, transceiver machine, transceiver circuit, interface circuit, interface can be interchanged; terms such as transmitter, transmitting unit, transmitting machine, transmitting circuit can be interchanged; terms such as receiver, receiving unit, receiving machine, receiving circuit can be interchanged.

In some embodiments, the communication device 8100 further includes one or more memories 8103 for storing data. Optionally, all or part of the memory 8103 may also be located outside the communication device 8100. In optional embodiments, the communication device 8100 may include one or more interface circuits 8104. Optionally, the interface circuit 8104 is connected to the memory 8103, and the interface circuit 8104 may be used to receive data from the memory 8103 or other apparatuses, and may be used to send data to the memory 8103 or other apparatuses. For example, the interface circuit 8104 may read data stored in the memory 8103 and send the data to the processor 8101.

The communication device 8100 described in the above embodiments may be a device or a terminal, but the scope of the communication device 8100 described in the present disclosure is not limited thereto, and the structure of the communication device 8100 may not be limited by FIG. 8A. The communication device may be an independent device or may be part of a larger device. For example, the communication device may be: 1) an independent integrated circuit (IC), or chip, or chip system or subsystem; (2) a collection of one or more ICs, optionally, the above IC collection may also include storage components for storing data and programs; (3) an ASIC, such as a modem; (4) a module embeddable in other devices; (5) a receiver, a terminal device, a smart terminal device, a cellular phone, a wireless device, a handset, a mobile unit, a vehicle-mounted device, an apparatus, a cloud device, an artificial intelligence device, etc.; (6) others, etc.

FIG. 8B is a schematic structural diagram of a chip 8200 according to some embodiments of the present disclosure. For the case where the communication device 8100 may be a chip or a chip system, reference may be made to the schematic structural diagram of the chip 8200 shown in FIG. 8B, but is not limited thereto.

The chip 8200 includes one or more processors 8201. The chip 8200 is used to perform any of the above methods.

In some embodiments, the chip 8200 further includes one or more interface circuits 8202. Optionally, terms such as interface circuit, interface, transceiver pin can be interchanged. In some embodiments, the chip 8200 further includes one or more memories 8203 for storing data. Optionally, all or part of the memory 8203 may be located outside the chip 8200. Optionally, the interface circuit 8202 is connected to the memory 8203, the interface circuit 8202 may be used to receive data from the memory 8203 or other apparatuses, and the interface circuit 8202 may be used to send data to the memory 8203 or other apparatuses. For example, the interface circuit 8202 may read data stored in the memory 8203 and send the data to the processor 8201.

In some embodiments, the interface circuit 8202 performs at least one of sending and/or receiving communication steps (e.g., step S2101, but not limited thereto) in the above methods. The interface circuit 8202 performing the sending and/or receiving communication steps in the above methods means, for example: the interface circuit 8202 performs data interaction between the processor 8201, the chip 8200, the memory 8203, or a transceiver device. In some embodiments, the processor 8201 performs at least one of other steps (e.g., step S2102, but not limited thereto).

The present disclosure also proposes a storage medium, on which instructions are stored, and when the instructions are executed on the communication device 8100, the communication device 8100 is caused to perform any of the above methods. Optionally, the above storage medium is an electronic storage medium. Optionally, the above storage medium is a computer-readable storage medium, but is not limited thereto, and may also be other apparatus-readable storage media. Optionally, the above storage medium may be a non-transitory storage medium, but is not limited thereto, and may also be a transitory storage medium.

The present disclosure also proposes a program product, where when the program product is executed by the communication device 8100, the communication device 8100 is caused to perform any of the above methods. Optionally, the above program product is a computer program product.

The present disclosure also proposes a computer program, where when the computer program is run on a computer, the computer is caused to perform any of the above methods.

## Claims

1. A communication method, **characterized in** being performed by a first network element and comprising:
receiving a first request sent by a first device, wherein the first request is sent to the first device when a terminal, after releasing a connection with a second device, determines to establish a communication connection with the first network element through the first device; and
sending a first response to the first device according to the received first request;
wherein the first device is a device of a terrestrial network; and the second device is a device of a non-terrestrial network;
wherein the first response indicates acceptance of establishing the communication connection between the terminal and the first network element through the first device.

2. The method according to claim 1, wherein after receiving the first request sent by the first device, the method further comprises:
when the terminal satisfies a first condition, using a first non-access stratum (NAS) count pre-stored in context information of the terminal as a second NAS count, and additionally storing at least one of the second NAS count and a first cell identifier in the context information of the terminal;
wherein the first condition comprises that the terminal is allowed to perform a store-and-forward operation, or the terminal is allowed to be in a store-and-forward operation;
wherein the first cell identifier is a cell identifier pre-stored in the context information of the terminal and having a mapping relationship with the second device.

3. The method according to claim 2, wherein the terminal satisfying the first condition is determined through a following manner:
the context information of the terminal comprises a first indication;
wherein the first indication indicates that the terminal is allowed to perform the store-and-forward operation, or that the terminal is allowed to be in the store-and-forward operation.

4. The method according to claim 2 or 3, wherein the context information of the terminal comprises cell information, and the cell information indicates an area covered by a last device having a connection relationship with the terminal;
wherein the terminal satisfying the first condition is determined through a following manner:
determining, according to the cell information, the last device having the connection relationship with the terminal;
the last device is a non-terrestrial device, determining that the terminal satisfies the first condition.

5. The method according to any one of claims 2 to 4, wherein the first request comprises a first NAS sequence number;
the first condition is further determined by at least one of following:
a first difference is greater than a preset threshold;
a feeder link corresponding to the second device is unavailable;
wherein the first difference is a difference between the first NAS sequence number and a second NAS sequence number, and the second NAS sequence number is determined based on the first NAS count.

6. The method according to any one of claims 2 to 5, wherein after sending the first response to the first device, the method further comprises:
receiving a first message sent by the second device after a feeder link is available, wherein the first message comprises a second cell identifier and a third NAS sequence number, and the second cell identifier has a mapping relationship with the second device; and
verifying integrity of the first message using an integrity verification algorithm.

7. The method according to claim 6, wherein verifying the integrity of the first message using the integrity verification algorithm comprises:
the first cell identifier and the second cell identifier are the same, and verifying the integrity of the first message using the integrity verification algorithm;
wherein input of the integrity verification algorithm is determined based on the third NAS sequence number and the second NAS count.

8. The method according to claim 6, wherein verifying the integrity of the first message using the integrity verification algorithm comprises:
verifying the integrity of the first message using the integrity verification algorithm;
wherein input of the integrity verification algorithm is determined based on the third NAS sequence number and the second NAS count.

9. The method according to any one of claims 6 to 8, wherein the first message further comprises first data, and the first data is uplink data sent by the terminal to the second device; and
wherein after verifying the integrity of the first message using the integrity verification algorithm, the method further comprises:
an integrity verification result of the first message indicates pass, accepting the first data;
the integrity verification result of the first message indicates fail, rejecting the first data.

10. The method according to claim 9, wherein after accepting the first data, the method further comprises:
deleting the second NAS count and/or the first cell identifier stored in the context information of the terminal.

11. A communication method, **characterized in** being performed by a first device and comprising:
receiving a first request sent by a terminal, wherein the first request is sent to the first device when a terminal, after releasing a connection with a second device, determines to establish a communication connection with a first network element through the first device; and
sending the first request to the first network element;
wherein the first device is a device of a terrestrial network; and the second device is a device of a non-terrestrial network.

12. The method according to claim 11, wherein after receiving the first request sent by the terminal, the method further comprises:
receiving a first response sent by the first network element, wherein the first response indicates that the first network element accepts establishment of the communication connection between the terminal and the first network element through the first device; and
sending the first response to the terminal.

13. A communication method, **characterized in** being performed by a terminal and comprising:
sending a first request to a first device, wherein the first request is sent to the first device when the terminal, after releasing a connection with a second device, determines to establish a communication connection with a first network element through the first device;
wherein the first device is a device of a terrestrial network; and the second device is a device of a non-terrestrial network.

14. The method according to claim 13, wherein sending the first request to the first device comprises:
determining that a second condition is satisfied, and sending the first request to the first device;
wherein the second condition is at least one of following:
a signal strength of the first device is greater than a signal strength of the second device;
a feeder link of the second device is unavailable.

15. The method according to any one of claims 13-14, wherein after sending the first request to the first device, the method further comprises:
receiving a first response, wherein the first response indicates acceptance of establishing the communication connection between the terminal and the first network element through the first device.

16. A first network element, **characterized in** comprising:
a receiving module, configured to receive a first request sent by a first device, wherein the first request is sent to the first device when a terminal, after releasing a connection with a second device, determines to establish a communication connection with the first network element through the first device; and
a sending module, configured to send a first response to the first device according to the received first request,
wherein the first device is a device of a terrestrial network; and the second device is a device of a non-terrestrial network;
wherein the first response indicates acceptance of establishing the communication connection between the terminal and the first network element through the first device.

17. A first device, **characterized in** comprising:
a receiving module, configured to receive a first request sent by a terminal, wherein the first request is sent to the first device when a terminal, after releasing a connection with a second device, determines to establish a communication connection with a first network element through the first device; and
a sending module, configured to send the first request to the first network element;
wherein the first device is a device of a terrestrial network; and the second device is a device of a non-terrestrial network.

18. A terminal, **characterized in** comprising:
a sending module, configured to send a first request to a first device, wherein the first request is sent to the first device when the terminal, after releasing a connection with a second device, determines to establish a communication connection with a first network element through the first device;
wherein the first device is a device of a terrestrial network; and the second device is a device of a non-terrestrial network.

19. A first network element, **characterized in** comprising:
one or more processors;
wherein the processor is configured to implement the communication method according to any one of claims 1 to 10.

20. A first device, **characterized in** comprising:
one or more processors;
wherein the processor is configured to implement the communication method according to any one of claims 11 to 12.

21. A terminal, **characterized in** comprising:
one or more processors;
wherein the processor is configured to implement the communication method according to any one of claims 13 to 15.

22. A communication system, **characterized in** comprising:
a first network element, configured to implement the communication method according to any one of claims 1 to 10;
a first device, configured to implement the communication method according to any one of claims 11 to 12; and
a terminal, configured to implement the communication method according to any one of claims 13 to 15.

23. A storage medium storing instructions thereon, **characterized in that** the instructions, when being executed on a communication device, cause the communication device to implement the communication method according to any one of claims 1-10, 11-12, and 13-15.
